# EUROPEAN PATENT APPLICATION

(11) **EP 4 657 689 A1**
(43) Date of publication of application: **03.12.2025**
(21) Application number: 24305843.5
(22) Date of filing: 29.05.2024
(51) Int. Cl.: H02J 1/08, H02J 7/00

(54) **DEVICE FOR COUPLING TO A BATTERY PACK, A SYSTEM INCLUDING THE DEVICE AND A METHOD FOR THE DEVICE**

(71) Applicant: NXP USA, Inc., Austin TX 78735 (US)
(72) Inventor: van Dijk, Lucas Pieter Lodewijk, 5656 AG Eindhoven (NL); Tico, Olivier, 31023 Toulouse Cedex 1 (FR)
(74) Representative: Schmütz, Christian Klaus Johannes

(57) **Abstract**

The present disclosure relates to a device comprising: a first terminal, a second terminal, a third terminal, a first load unit, a first sensor unit, and a second load unit, wherein the device is configured to be coupled to a first group of cells of a battery via the first and second terminals, wherein the device is configured to be coupled to a second group of cells of a battery via the second and third terminals, wherein a first circuit string of the device extends between the first and second terminals, wherein the first load unit is integrated into the first circuit string, wherein the first sensor unit is configured to measure a first current in the first circuit string, wherein a second circuit string of the device extends between the second and third terminals, wherein the second load unit is integrated into the second circuit string, and wherein the device is configured to control the second load unit based on the first current such that the second load unit causes a second current in the second circuit string corresponding to the first current. The present disclosure also relates to a system comprising the device and the battery pack. Further, the present disclosure also relates to a method for the device.

## Description

### TECHNICAL FIELD

The present disclosure relates to a device, that may be coupled to a battery pack, a system comprising the device and the battery pack, and a method for the device.

### BACKGROUND

As part of the electrification of vehicles and other machines, the need for ever-increasing energy storage capacities of batteries has developed. A battery may comprise one or more battery packs. Each battery pack comprises a plurality of cells. A cell may also be referred to as a battery cell. Each cell is configured to store electrical energy. Each cell may be configured as a lithium-ion cell or another cell. The cells of a battery pack may be connected in series so that the voltage between the terminals of the battery pack is the sum of the individual voltages of the associated cells.

The cells of a battery pack may naturally comprise small deviations in their energy storage capacities. With the help of a battery cell regulator, each cell of the battery pack may be brought into a state that ensures, for example, a large total energy storage capacity of the battery pack, a long service life of the battery pack, or other properties. The battery cell regulator may also be referred to as battery cell controller (BCC). The battery cell regulator may be configured to measure a cell voltage, a cell current and/or a cell temperature. In an example, the cells of the battery pack may be controlled by the battery cell regulator so that the same electrical voltage is dropped across each cell of the battery pack. The voltage dropped across a cell is also referred to as the cell voltage.

In order to control the cells of a battery pack and/or to set the cells of the battery pack to the desired state, the battery cell regulator requires electrical energy. The battery cell regulator may receive the electrical energy from the battery pack.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a device is provided, which comprises a first terminal, a second terminal, a third terminal, a first load unit, a first sensor unit, and a second load unit, wherein the device is configured to be coupled to a first group of cells of a battery via the first and second terminals, wherein the device is configured to be coupled to a second group of cells of a battery via the second and third terminals, wherein a first circuit string of the device extends between the first and second terminals, wherein the first load unit is integrated into the first circuit string, wherein the first sensor unit is configured to measure a first current in the first circuit string, wherein a second circuit string of the device extends between the second and third terminals, wherein the second load unit is integrated into the second circuit string, and wherein the device is configured to control the second load unit based on the first current such that the second load unit causes a second current in the second circuit string corresponding to the first current.

In one or more embodiments, the device further comprises a fourth terminal and a third load unit, wherein a third circuit string of the device extends between the first and fourth terminals, wherein the third load unit is integrated into the third circuit string, and wherein the device is configured to control the third load unit based on the first current such that the third load unit causes a third current in the third circuit string corresponding to the first current.

In one or more embodiments, the first load unit comprises a processing unit, a dc-dc converter, and/or at least one linear regulator unit.

In one or more embodiments, the first sensor unit comprises a first current mirror circuit including at least two transistors referred to as first sensor transistor and first mirror transistor, wherein the first sensor transistor is integrated into the first circuit string, wherein the first mirror transistor is coupled to the first sensor transistor such that the first mirror transistor causes through the first mirror transistor a first driver current that is in a predefined first ratio to the first current through the first sensor transistor, and wherein the device is configured to control the second load unit based on the first driver current.

In one or more embodiments, the first current mirror circuit comprises another transistor which is referred to as first cascode transistor, wherein the first cascode transistor is connected in series to the first mirror transistor, and wherein the gate of the first cascode transistor is coupled to the second terminal.

In one or more embodiments, the second load unit comprises a second current mirror circuit including at least two transistors referred to as second sensor transistor and second mirror transistor, wherein the second sensor transistor and the first mirror transistor are coupled in series, wherein the second mirror transistor is integrated into the second circuit string, and wherein the second mirror transistor is coupled to the second sensor transistor such that the second mirror transistor causes through the second circuit string the second current that is in a predefined second ratio to the first driver current.

In one or more embodiments, the first mirror transistor, the first cascode transistor, and the second sensor transistor are coupled in series.

In one or more embodiments, the second ratio is the inverse of the first ratio.

In one or more embodiments, the first ratio and the second ratio are predefined, such that the second current corresponds to the first current.

In one or more embodiments, the third load unit comprises a third current mirror circuit including two transistors referred to as third sensor transistor and third cascode transistor, wherein the first current mirror comprises also a fourth mirror transistor, wherein the fourth mirror transistor is coupled to the first sensor transistor such that the fourth mirror transistor causes through the fourth mirror transistor an intermediate current that is in a predefined fourth ratio to the first current through the first sensor transistor, wherein the first sensor unit comprises a fifth current mirror circuit including two transistors referred to as fifth sensor transistor and fifth mirror transistor, wherein the fourth mirror transistor and the fifth sensor transistor are connected in series, wherein the fifth mirror transistor is coupled to the fifth sensor transistor such that the fifth mirror transistor causes through the fifth mirror transistor a second driver current that is in a predefined fifth ratio to the intermediate current through the fifth sensor transistor, wherein the third senor transistor and the fifth mirror transistor are connected in series, wherein the third mirror transistor is integrated into the third circuit string, wherein the third mirror transistor is coupled to the third sensor transistor such that the third mirror transistor causes through the third circuit string a third current that is in a predefined third ratio to the second driver current.

In one or more embodiments, the third ratio, fourth ratio, fifth ratio, and the third ratio are predefined, such that the third current corresponds to the first current.

In accordance with a second aspect of the present disclosure, a system is provided, which comprises a battery having a plurality of cells divided into a plurality of groups of cells, and a device according to the first aspect and/or any of the preceding embodiments.

In one or more embodiments, the cells of the battery are divided into two groups of cells.

In one or more embodiments, the device is configured according to any one of claims 3 to 11, wherein the cells of the battery are divided into three groups of cells.

In accordance with a third aspect of the present disclosure, a method for a device is provided, wherein the device comprising a first terminal, a second terminal, a third terminal, a first load unit, a first sensor unit, and a second load unit, wherein the device is configured to be coupled to a first group of cells of a battery via the first and second terminals, wherein the device is configured to be coupled to a second group of cells of a battery via the second and third terminals, wherein a first circuit string extends between the first and second terminals, wherein the first load unit is integrated into the first circuit string, wherein a second circuit string extends between the second and third terminals, wherein the second load unit is integrated into the second circuit string, and wherein the method comprises the following steps: (a) measuring a first current in the first circuit string via the first sensor unit, and (b) controlling the second load unit based on the first current via the device so that the second load unit causes a second current in the second circuit string corresponding to the first current.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figures 1 to 4 show simplified block diagrams of a device and system.
Figure 5 shows a simplified flow chart for the device.

### DESCRIPTION OF EMBODIMENTS

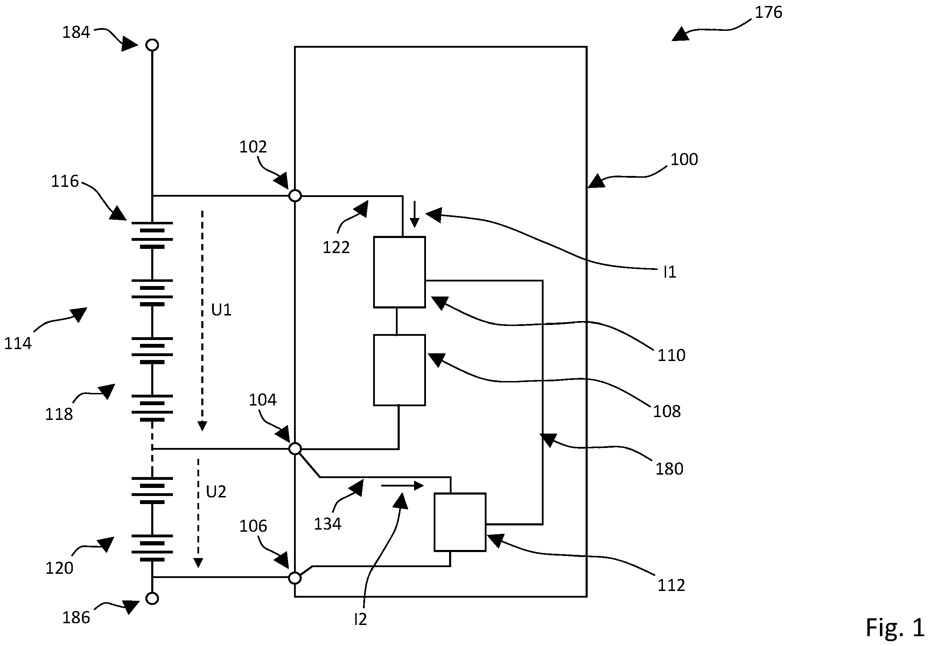

Figure 1 schematically illustrates an example of a device 100. Figure 1 also schematically illustrates an example of a battery pack 114.

The battery pack 114 may comprise a plurality of cells 116 connected in series between a first battery terminal 184 of the battery pack 114 and a second battery terminal 186 of the battery pack 114. In an example, each cell 116 of the battery pack 114 may comprise a single cell or a parallel connection of a plurality of single cells.

There is a trend to increase the number of cells 116 of a battery pack 114. As the number of cells 116 of the battery pack 114 increases, the electrical voltage provided by the battery pack 114 between the two battery terminals 184, 186 increases, which may also be referred to as the battery voltage.

In order to connect an electrical unit to the two battery terminals 184, 186 of the battery pack 114, it is necessary that the electrical unit can withstand the battery voltage provided by the battery pack 114. As the battery voltage increases, the demands on the electrical unit increase in order not to be destroyed by the battery voltage. For example, individual components of the electrical unit must comprise a higher dielectric strength. The greater the battery voltage of the battery pack 114, the greater the financial costs and effort required to adapt the electrical unit so that the electrical unit is not destroyed by the battery voltage.

The present description is based on the idea of not supplying the electrical unit with the battery voltage that is present between the first and second battery terminals 184, 186, but rather supplying the electrical unit with a first voltage U1 that is dropped across a first group 118 of cells 116 of the battery pack 114. The battery pack 114 also comprises (at least) a second group 120 of cells 116 of the battery pack. A second voltage U2 drops across the second group 120 of cells. The number of cells 116 of the first group 118 is therefore smaller than the total number of cells 116 of the battery pack 114. As a logical consequence, the first voltage U1 is smaller than the battery voltage of the battery pack 114 (between the two battery terminals 184, 186). By using the first voltage U1 to supply the electrical unit with electrical energy, it is possible for the electrical unit to be operated non-destructively and to be manufactured with low-cost components.

Based on the ideas explained above, a device 100 has been developed. An example of the device 100 is shown schematically in Figure 1.

The device 100 comprises a first terminal 102, a second terminal 104, a third terminal 106, a first load unit 108, a first sensor unit 110, and a second load unit 112.

The device 100 is configured such that the first terminal 102 and the second terminal 104 may be coupled to the first group 118 of cells 116 of the battery pack 114. In an example, the first and second terminals 102, 104 may be coupled to the first group 118 of cells 116 such that the series connection of the cells 116 of the first group 118 extends from the first terminal 102 to the second terminal 104. In an example, the first and second terminals 102, 104 may be coupled to the first group 118 of cells 116 such that the first voltage U1 drops between the first terminal 102 of the device 100 and the second terminal 104 of the device 100. As an effect, the device 100 is supplied with the first voltage U1 dropped between the first and second terminals 102, 104 of the device 100. The first voltage U1 may be smaller than the battery voltage.

The device 100 comprises a first circuit string 122. The first circuit string 122 extends from the first terminal 102 of the device 100 to the second terminal 104 of the device 100. As an effect, the first voltage U1 may drop across the first circuit string 122.

The first load unit 108 of the device 100 is integrated into the first circuit string 122. The first load unit 108 may be one of a plurality of series-connected units of the first circuit string 122. In an example, at least one component of the first load unit 108 may be integrated into the first circuit string 122. If a first current I1 flows through the first circuit string 122, the first load unit 108, in particular the aforementioned component of the first load unit 108, may also have the first current I1 flowing through it. In this way, the first load unit 108 may be supplied with electrical energy provided by the first group 118 of cells 116.

In particular, the first current I1 may flow if the first group 118 of cells 116 is coupled between the first terminal 102 of the device 100 and the second terminal 104 of the device 100. However, the first current I1 does not flow solely through the first circuit string 122, but also through the first group 118 of cells 116. If the first current I1 flows through the first group 118 of cells 116, the electrical energy stored by the cells 116 of the first group 118 decreases. The decreasing, electrical energy of the first group 118 of cells 116 causes the first voltage U1 and/or the cell voltage of each cell 116 of the first group 118 to decrease. Unless further action is performed, the cell voltage in each cell 116 of the first group 118 of the battery pack 114 would be less than the cell voltage of each cell 116 of the second group 120 of the battery pack 114.

To ensure a long life of the battery pack 114, to ensure a high overall energy storage capacity of the battery pack 114, and/or to ensure other characteristics of the battery pack 114, it is desirable that all cells 116 of the battery pack 114 are charged or discharged with the same current.

In an example, the second and third terminals 102, 104 of the device may be coupled to the second group 118 of cells 116 such that the second voltage U2 drops between the second terminal 104 of the device 100 and the third terminal 106 of the device 100.

Previously, it was explained that the load unit 108 may cause a first current I1 through the first circuit string 122 to supply the first load unit 108 with electrical energy provided by the first group 118 of cells of the battery pack 114. As an effect, the first voltage U1 and/or the cell voltage of the cells 116 of the first group 118 of the battery pack 114 may decrease. The following explanation is based on the idea of loading the cells 116 of the second group 120 of the battery pack 114 with a second current I2, so that the second voltage U2 and/or the cell voltage of the cells 116 of the second group 120 of the battery pack 114 (also) decrease. The second current I2 should be selected such that the same current is induced in of each cell 116 of the battery pack 114.

The device 100 comprises the first sensor unit 110. The first sensor unit 110 is configured to measure the first current I1 through the first circuit string 122. The first sensor unit 110 may be integrated into the first circuit string 122. In particular, a component of the first sensor unit 110 may be integrated into the first circuit string 122. If the first current I1 flows through the first circuit string 122, then the first current I1 may also flow through the first sensor unit 110, in particular through the associated component of the first sensor unit 110. The first sensor unit 110 may be configured to directly or indirectly measure the first current I1 flowing through the first sensor unit 110.

The device 100 further comprises a second circuit string 134 extending from the second terminal 104 of the device 100 to the third terminal 106 of the device 100. The device 100 comprises a second load unit 112. The second load unit 112, in particular a component of the second load unit 112, is integrated into the second circuit string 134. The second load unit 112 may be a controllable load unit. The second load unit 112 may be configured such that an electrical resistance integrated into the second circuit string 134 by the second load unit 112 is controllable. The following explanation is based on the idea that the second load unit 112 may be controlled such that the second current I2 in the second circuit string 134 corresponds to the first current I1 in the first circuit string 122.

The device 100 is configured to control the second load unit 112 based on the measured first current I1 such that the second load unit 112 causes the second current I2 in the second circuit string 134 to correspond to the first current I1.

If the second group 120 of cells 116 are coupled between the second terminal 104 and the third terminal 106, while the second current I2 is caused by the second load unit 112, then the second current I2 also flows through the cells 116 of the second group 120. The second current I2 corresponds, at least in amount, to the first current I1. The device 100 may be configured such that the second current I2 is a copy of the first current I1. As an effect, the same amount of current flows through all cells 116 (of both groups 118, 120) so that all cells 116 are discharged equally by means of the device 100. As a further effect, the first load unit 108 may be supplied with electrical energy from the cells 116 of the first group 118 without causing uneven discharge of the cells 116 of the battery pack 114. The device 100 may ensure that the cells 116 of the battery pack 114 remain balanced. As another advantage, it is not necessary for the first load unit 108 to comprise technically complex and/or financially expensive components to withstand a potentially high electrical voltage between the two battery terminals 184, 186 of the battery pack 114. The first load unit 108 may be less expensive financially and/or manufactured with less technically complex components because the first voltage U1 that can be applied between the first terminal 102 and the second terminal 104 of the device 100 is less than the electrical voltage between the two battery terminals 184, 186 of the battery pack 114. As a further advantage, the battery pack 114 may comprise a large number of cells such that the battery pack 114 may be manufactured in a financially less expensive and compact manner relative to the energy storage capacity provided by the battery pack 114.

In an example, the first sensor unit 110 may be configured to measure the first current I1 in the first circuit string 122 and further configured to control the second load unit 112 such that the second load unit 112 causes the second current I2 in the second circuit string 134. The first sensor unit 110 may be coupled to the second load unit 112 via the first control line 180, such that the first sensor unit 110 may control the second load unit 112.

It was previously explained that the second load unit 112 is controlled based on the first current I1 measured by the first sensor unit 110, such that the second current I2 caused by the second load unit 112 corresponds to the first current I1. In an example, the second current I2 corresponds to the first current I1 if the amount of the second current I2 differs from the amount of the first current I1 by less than 10%, less than 7% or less than 5%. In an example, assuming that the first current I1 is 10 mA and the second current I2 may deviate from the first current I1 by less than 10 % so that the second current I2 still corresponds to the first current I1. In this example, the second current I2 must be greater than 9 mA and less than 11 mA for the second current I2 to be considered to correspond to the first current I1.

The first load unit 108 may comprise a processing unit, a DC-DC converter, and/or at least one linear regulator unit.

In another example, the first load unit 108 may comprise a battery cell regulator. At least one component of the battery cell regulator may be integrated into the first circuit string 122. The battery cell regulator may be configured to be coupled to each cell 116 of the battery pack 114 via other interfaces (not shown) of the device 100. The battery cell regulator may further be configured to control each cell 116 such that all cells 116 of the battery pack 114 comprise the same battery voltage. The battery cell regulator may be configured to balance the cells 116 of the battery pack 114. To control the cells 116 and/or to balance the cells 116, the battery cell regulator may receive (and/or draw) electrical power from the first group 118 of cells 116 of the battery pack 114. The previously explained embodiment of the device 100 also effectively prevents unbalanced loading of the cells 116 of the battery pack 114 when controlling the cells 116 and/or balancing the cells 116. As an effect, it was also previously explained that the first load unit 108, in particular the battery cell regulator, causes a first current I1 through the cells 116 of a first group 128 of cells 116, and that an equivalent, second current I2 is caused by through the cells 116 of the second group 120 of cells.

Figure 1 also schematically illustrates an example of a system 176. For the system 176, reference is made to the preceding explanations, advantageous features, technical effects, and advantages in an analogous manner as they have been explained in connection with the device 100.

The system 176 comprises the device 100 and the battery pack 114. In an example of the system 176, the battery pack 114 is coupled to the device 100 such that the cells 116 of the first group 118 are coupled in series between the first terminal 102 and the second terminal 104. Further, in an example of the system 176, the battery pack 114 is coupled to the device 100 such that the cells 116 of the second group 120 are coupled in series between the second terminal 104 and the third terminal 106. All cells 116 of the battery pack 114 are coupled in series between the first battery terminal 184 and the second battery terminal 186.

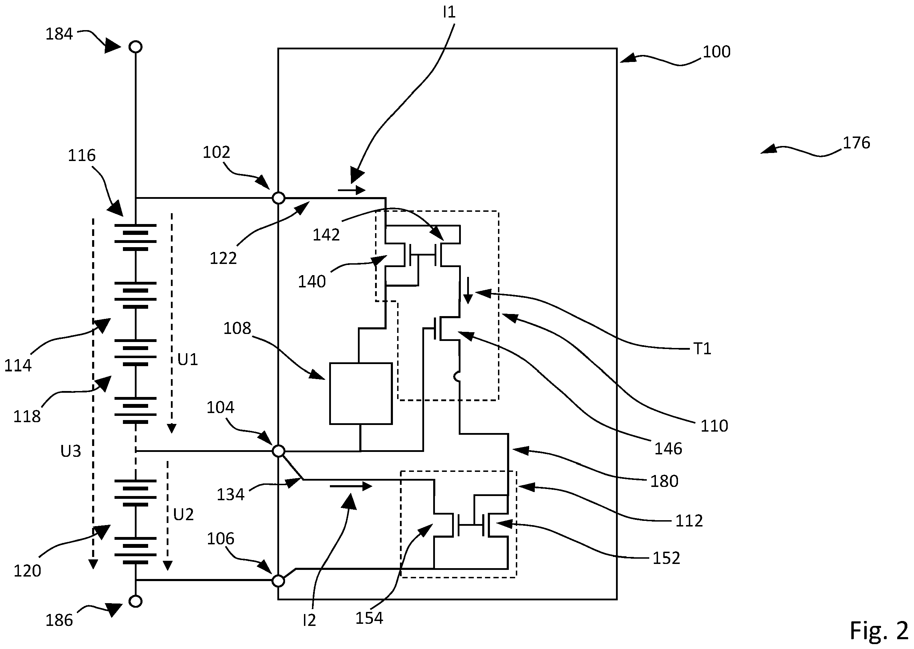

Figure 2 schematically illustrates another example of the device 100. For the device 100, reference is made to the preceding explanations, advantageous features, technical effects, and advantages in an analogous manner as explained in connection with the device 100 of Figure 1.

In an example, the first sensor unit 110 comprises a first current mirror circuit comprising two transistors 140, 142 referred to as first sensor transistor 140 and first mirror transistor 142. The first sensor transistor 140 may be integrated into the first circuit string 122. The first sensor transistor 140 may be configured as a P-MOS transistor. A source terminal of the first sensor transistor 140 may be coupled to the first terminal 102 of the device 100. A drain terminal of the first sensor transistor 140 may be coupled to the first load unit 108. The first mirror transistor 142 may be configured as a P-MOS transistor. A source terminal of the first mirror transistor 142 may be coupled to the first terminal 102 of the device 100. A gate terminal of the first mirror transistor 142 may be coupled to a gate terminal of the first sensor transistor 140. The gate terminal of the first sensor transistor 140 may be coupled to the drain terminal of the first sensor transistor 140.

In an example, the first mirror transistor 142 is coupled to the first sensor transistor 140, for example via the two associated gate terminals, such that the first mirror transistor 142 causes a first drive current T1 through the first mirror transistor 142. The first drive current T 1 has a predefined first ratio to the first current I1 that may flow through the first sensor transistor 140. In an example, the following equation is valid: T1 = 1^{st}-ratio * I1. If the first current I1 is caused by the first load unit 108, the first current I1 flows through the first sensor transistor 140. Due to the gate terminals of the first sensor transistor 140 and first mirror transistor 142 being coupled to each other, and due to the coupling of the gate and drain terminals of the first sensor transistor 140, the first drive current T1 is caused by the first mirror transistor 142.

The drain terminal of the first mirror transistor 142 may be directly or indirectly coupled to the second load unit 112. The first drive current T1 may be used to drive the second load unit 112. In an example, the device 100 is configured to control the second load unit 112 based on the first drive current T1. The larger the first current I1 is, the larger the first drive current T1 may be. The larger the first drive current T1 is, the larger the electrical resistance into the second circuit string 134 caused by the second load unit 112 may be. The device 100 may be configured to cause the electrical resistance by the second load unit 112 such that the second current I2 caused by the electrical resistance of the second load unit 112 is equal to the first current I1.

The predefined first ratio representing the first drive current T1 to the first current I1 is in particular less than 1. The first ratio may, for example, be a value between 0.01 and 0.0001. The first drive current T1 is used to control the second load unit 112, so that the small first drive current T1 is helpful to keep electrical losses small. In an example, the first drive current T1 may be negligibly small. The first drive current T1 may represent the first current I1, in particular due to the predefined first ratio.

In an example, the second load unit 112 comprises a second current mirror circuit comprising two transistors 152, 154 referred to as the second sensor transistor 152 and the second mirror transistor 154. The second sensor transistor 152 may be coupled to the first sensor unit 110 via a first control line 180. In an example, the second sensor transistor 152 may be directly or indirectly coupled to the first mirror transistor 142, in particular to the associated drain terminal, via the first control line 180. The second sensor transistor 152 may be designed as an N-MOS transistor. A source terminal of the second sensor transistor 152 may be coupled to the third terminal 106 of the device 100. A drain terminal of the second sensor transistor 152 may be coupled to the first control line 180. The second mirror transistor 154 may be configured as an N-MOS transistor. The second mirror transistor 154 may be integrated into the second circuit string 134. A source terminal of the second mirror transistor 154 may be coupled to the third terminal 106 of the device 100. A drain terminal of the second mirror transistor 154 may be coupled to the second terminal 104. A gate terminal of the second mirror transistor 152 may be coupled to a gate terminal of the second sensor transistor 154. The gate terminal of the second sensor transistor 152 may be coupled to the drain terminal of the second sensor transistor 152.

In an example, the first mirror transistor 142 and the second sensor transistor 152 are coupled in series. As an effect, a first drive current T1 caused by the first mirror transistor 142 also flows through the second sensor transistor 152.

In an example, the second mirror transistor 154 is integrated into the second circuit string 134. As an effect, the second mirror transistor 154 may form a controllable, electrical resistor in the second circuit string 134.

In an example, the second mirror transistor 154 is coupled to the second sensor transistor 152, for example via the two associated gate terminals, such that the second mirror transistor 154 causes the second current I2 through the second mirror transistor 154 and/or through the second circuit string I2. The second drive current I2 may be in a predefined second ratio to the first drive current T1, which may also flow through the second sensor transistor 152. Due to the coupled gate terminals (of the second sensor transistor 152 and the second mirror transistor 154) and due to the coupling of the gate and drain terminals of the second sensor transistor 152, the second current I1 is caused by the second mirror transistor 154. The second current I2 may be in the predefined second ratio to the first driver current T1. In an example, the following equation is valid: I2 = 2^{nd}-ratio * T1.

In an example, the second ratio is the inverse of the first ratio. For example, if the first ratio is 0.001, the second ratio may be 1000. As an effect, the second current I2 may correspond to the first current I1. In particular, the first current I1 and the second current I2 may be equal in magnitude. In an example, the first ratio and the second ratio may be predefined such that the second current I2 is equal to the first current I1.

In an example, the second mirror transistor 154 is coupled to the second sensor transistor 152 such that the second mirror transistor 154 causes the second current I4 through the second circuit string 134 such that the second current I2 is in the second ratio to the first drive current I4 and/or such that the second current I2 is equal to the first current I1. In an example, the following equation is valid: I2 = 2^{nd}-ratio * T1.

In an example, the first current mirror circuit may comprise a further transistor referred to as a first cascode transistor 146. The first cascode transistor 146 may be coupled in series with the first mirror transistor 142 and/or the second sensor transistor 152. The first cascode transistor 146 may be configured as a P-MOS transistor. A source terminal of the first cascode transistor 146 may be coupled to the drain terminal of the first mirror transistor 142. A drain terminal of the first cascode transistor 146 may be coupled to the first control line 180. The first control line 180 may extend from the drain terminal of the first cascode transistor 146 to the drain terminal of the second sensor transistor 152. A gate terminal of the first cascode transistor 146 may be coupled to the second terminal 104 of the device 100.

The first cascode transistor 146 may enable, as an effect, a third voltage U3 dropped between the first terminal 102 and the third terminal 106. As a result, the first voltage may be dropped across a series connection of the first mirror transistor 142, the first cascode transistor 146, and the second sensor transistor 152. The gate terminal of the second sensor transistor 152 is coupled to the drain terminal of the second sensor transistor 152, so that only a small voltage is dropped between the drain terminal and the source terminal of the second sensor transistor 152. As an effect, the third voltage U3 may drop substantially across the first mirror transistor 142 and the first cascode transistor 146. In an example, the same voltage, i.e., approximately half of the third voltage U3, may be dropped across each of the first mirror transistor 142 and the first cascode transistor 146, assuming for simplicity that the voltage drop across the second sensor transistor 152 is negligible. The first cascode transistor 146 offers the advantage that the voltage drop across the first mirror transistor 142 is not too large. In an example, this may prevent the third voltage U3 from destroying the first mirror transistor 142.

In an example, the second voltage U2 may be between 10 % and 100 % of the first voltage U1. For example, if the first voltage U1 is 90 V, the second voltage U2 may be between 9 V and 90 V. The third voltage U3 may be between 99 V and 180 V, for example. A ratio between U1 and U2 may depend on the technology negative substrate voltage capability. In an example, the ratio may not be limited by high voltage devices max voltage between source and drain being up to 90V. The first load unit 108 may comprise, for example, the battery cell regulator, which is operated in particular with the first voltage U1, such as 90 V. The battery cell regulator may be individually coupled to all cells 116 of the battery pack 114 to balance all cells 116.

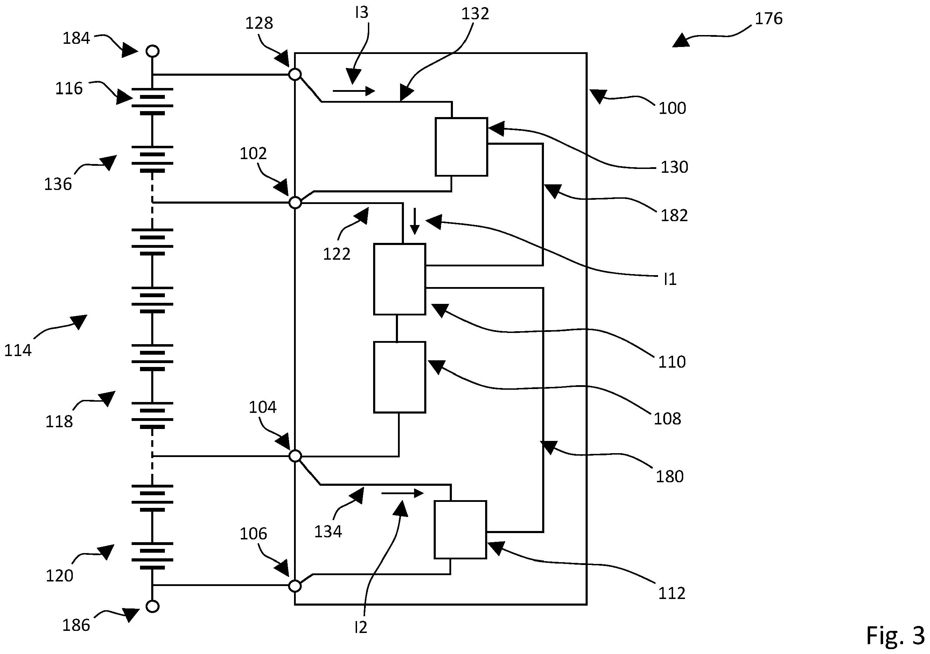

Figure 3 schematically illustrates another example of the device 100. For the device 100 of Figure 3, reference is made to the explanations, advantageous features, technical effects and advantages in an analogous manner as previously explained for the device 100, in particular in connection with Figures 1 and/or 2.

Figure 3 also schematically illustrates an example of a battery pack 114. For an example of the system 176, the battery pack 114 may be coupled to the device 100. The following explanations may refer to the system 176 and/or to the device 100 alone.

In the example of Figure 3, the cells 116 of the battery pack 114 are divided into three groups 118, 120, 136. The first group 118 of cells 116 is arranged between the third group 136 of cells 116 and the second group 120 of cells 116. The third group 136, the first group 118, and the second group 120 may be connected in series between the first battery terminal 184 and the second battery terminal 186.

In an example, the device 100 further comprises a fourth terminal 128. A third circuit string 132 of the device 100 may extend between the fourth terminal 128 and the first terminal 102. The device 100 may further comprise a third load unit 130. The third load unit 130 may be configured analogously to the second load unit 112.

The third load unit 130, in particular a component of the third load unit 130, is integrated into the third circuit string 132. The third load unit 130 may be a controllable load unit. The third load unit 130 may be configured such that an electrical resistance integrated into the third circuit string 132 by the third load unit 130 is controllable. The following explanation is based on the idea that the third load unit 130 may be controlled such that a third current I3 may be caused in the third circuit string 132. In this regard, the control of the third load unit 130 may be performed such that the third current I3 corresponds to the first current I1 (in the first circuit string 122).

In an example, the device 100 is configured to control the third load unit 130 based on the first current 122 such that the third load unit 130 causes the third current I3 in the third circuit string 132 such that the third current I3 corresponds to the first current I1.

If the third group 136 of cells 116 is coupled between the fourth terminal 128 and the first terminal 102 while the third current I3 is caused by the third load unit 130, then the third current I3 also flows through the cells 116 of the third group 136. The third current I3 corresponds, at least in amount, to the first current I1. The device 100 may be configured such that the third current I3 is a copy of the first current I1. As an effect, the same amount of current flows through all cells 116 (all three groups 118, 120, 136) so that all cells 116 are discharged equally. As another effect, the first load unit 108 may be supplied with electrical energy from the cells 116 of the first group 118 without causing uneven discharge of the cells 116 of the battery pack 114. The device 100 may ensure that the cells 116 of the battery pack 114 remain balanced. As another effect, the first load unit 108 does not need to comprise technically complex and/or financially expensive components to withstand the potentially high electrical voltage between the two battery terminals 184, 186 of the battery pack 114. As an effect, the first load unit 108 may be financially cheaper and/or less technically complex to manufacture because the first voltage U1 (between the first terminal 102 and the second terminal 104) is less than the electrical battery voltage between the two battery terminals 184, 186 of the battery pack 114. As a further advantage, the battery pack 114 may comprise a large number of cells 116 such that the battery pack 114 may be manufactured in a financially advantageous compact manner relative to the energy storage capacity provided by the battery packs 114.

As previously discussed, the first sensor unit 110 may be configured to measure the first current I1 in the first circuit string 122. In an example, the first sensor unit 110 may further be configured to control the third load unit 130 such that the third load unit 130 causes the third current I3 in the third circuit string 132. The first sensor unit 110 may be coupled to the third load unit 130 via a second control line 182, such that the first sensor unit 110 may control the third load unit 130.

It was previously explained that the third load unit 130 may be controlled based on the first current I1 measured by the first sensor unit 110, such that the third current I3 caused by the third load unit 130 corresponds to the first current I1. In an example, the third current I3 corresponds to the first current I1 if the amount of the third current I3 differs from the amount of the first current I1 by less than 10%, less than 7% or less than 5%.

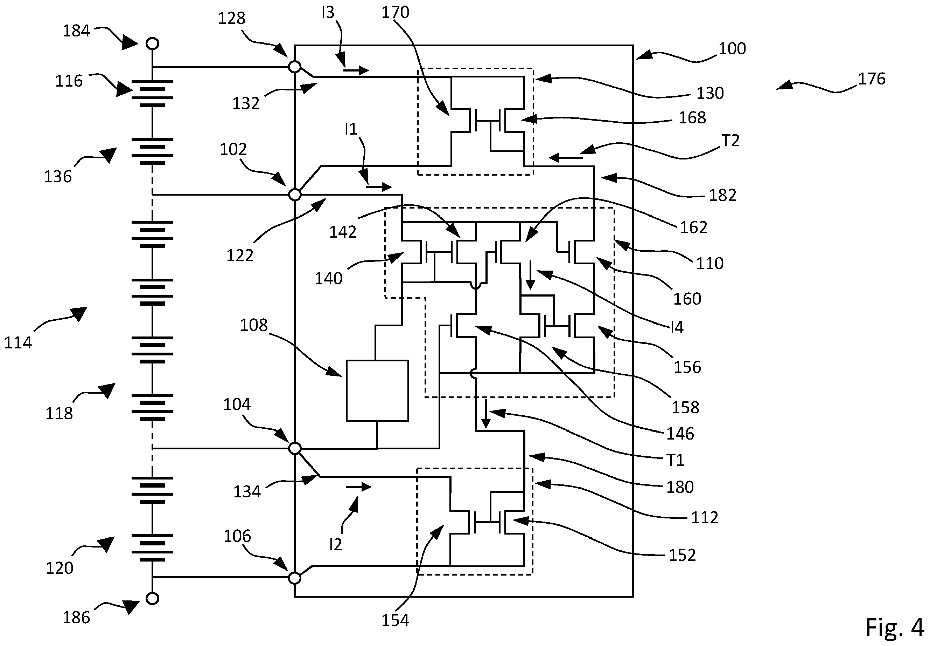

Figure 4 schematically illustrates a further example of the device 100. For the device 100 of Figure 4, reference is made to the explanations, advantageous features, technical effects and advantages in an analogous manner as previously explained for the device 100, in particular in connection with Figures 1, 2 and/or 3.

Figure 4 also schematically illustrates an example of a battery pack 114. For an example of the system 176, the battery pack 114 may be coupled to the device 100. The following explanations may refer to the system 176 and/or to the device 100 alone.

In an example, the third load unit 130 comprises a third current mirror circuit comprising two transistors 168, 170 referred to as third sensor transistor 168 and third mirror transistor 170. The third sensor transistor 168 may be coupled to the first sensor unit 110 via the second control line 182. The third sensor transistor 168 may be configured as a P-MOS transistor. A source terminal of the third sensor transistor 168 may be coupled to the fourth terminal 128 of the device 100. A drain terminal of the third sensor transistor 168 may be coupled to the second control line 182. The third mirror transistor 170 may be configured as a P-MOS transistor. The third mirror transistor 170 may be integrated into the third circuit string 132. A source terminal of the third mirror transistor 170 may be coupled to the fourth terminal 128 of the device 100. A drain terminal of the third mirror transistor 170 may be coupled to the first terminal 102 of the device 100. A gate terminal of the third mirror transistor 170 may be coupled to a gate terminal of the third sensor transistor 168. The gate terminal of the third sensor transistor 168 may be coupled to the drain terminal of the third sensor transistor 168.

In an example, the third mirror transistor 170 is integrated into the third circuit string 132. As an effect, the third mirror transistor 170 may form a controllable, electrical resistor in the third circuit string 132. The controllable, electrical resistor may be a controllable current generator and/or may comprise the controllable current generator.

In an example, the first current mirror circuit comprises another transistor referred to as a fourth mirror transistor 162. The fourth mirror transistor 162 is coupled to the first sensor transistor 140 such that the fourth mirror transistor 162 causes an intermediate current I4 (through the fourth mirror transistor 162), wherein the intermediate current I4 is in a predefined fourth ratio to the first current I1 (through the first sensor transistor 140). In an example, the following equation may be valid: I4 = 4^{th}-ratio * I1.

In an example, the first sensor unit 110 further comprises a fifth current mirror circuit comprising two transistors 158, 156, referred to as the fifth sensor transistor 158 and the fifth mirror transistor 156. The fourth mirror transistor 162 and the fifth sensor transistor 158 may be coupled in series.

The fourth mirror transistor 162 may be configured as a P-MOS transistor. A source terminal of the fourth mirror transistor 162 may be coupled to the first terminal 102 of the device. A gate terminal of the fourth mirror transistor 142 may be coupled to the gate terminal of the first sensor transistor 140.

The fifth sensor transistor 158 may be configured as an N-MOS transistor. A drain terminal of the fourth mirror transistor 162 may be coupled to a drain terminal of the fifth sensor transistor 158. A source terminal of the fifth sensor transistor 158 may be coupled to the second terminal 104 of the device 100. A gate terminal of the fifth sensor transistor 158 may be coupled to the drain terminal of the fifth sensor transistor 158.

The fifth mirror transistor 156 may be configured as an N-MOS transistor. A source terminal of the fifth mirror transistor 156 may be coupled to the second terminal 104 of the device 100. A gate terminal of the fifth mirror transistor 156 may be coupled to the gate terminal of the fifth sensor transistor 158.

In an example, the fifth mirror transistor 156 is coupled to the fifth sensor transistor 158 such that the fifth mirror transistor 156 causes a second drive current T2 through the fifth mirror transistor 156, wherein the second drive current T2 is in a predefined fifth relationship to the intermediate current I4. In an example, the following equation may be valid: T2 = 5^{th}-ratio * 14.

The fifth mirror transistor 156 and the third sensor transistor 168 may be directly or indirectly coupled via the second control line 182. In an example, the fifth mirror transistor 156 and the third sensor transistor 168 are coupled in series. Therefore, the second drive current T2 caused by the fifth mirror transistor 156 may also flow through the third sensor transistor 168.

Based on the foregoing explanations, it may be understood in an example that the intermediate current I4 is in the fourth ratio to the first current I1. The second drive current T2 may be in the fifth ratio to the intermediate current I4. The second current I3 may be in the third ratio to the second drive current T2. The third, fourth and fifth ratios may each be predefined. In an example, the third, fourth and fifth ratios may be predefined such that the third current I3 corresponds to the first current I1.

In an example, the third mirror transistor 170 is integrated into the third circuit string 132 and/or coupled to the third sensor transistor 168 such that the third mirror transistor 170 causes the third current I3 through the third circuit string 132 and such that the third current I3 is in the predefined third ratio to the second drive current T2.

In an example, the first sensor unit 110 may comprise another transistor referred to as the second cascode transistor 160. The second cascode transistor 160 may be coupled in series with the fifth mirror transistor 156. The second cascode transistor 160 may be configured as an N-MOS transistor. A source terminal of the second cascode transistor 160 may be coupled to a drain terminal of the fifth mirror transistor 156. A drain terminal of the second cascode transistor 160 may be coupled to the second control line 182. The second control line 182 may extend from the drain terminal of the second cascode transistor 160 to the drain terminal of the third sensor transistor 168. A gate terminal of the second cascode transistor 160 may be coupled to the first terminal 102 of the device 100.

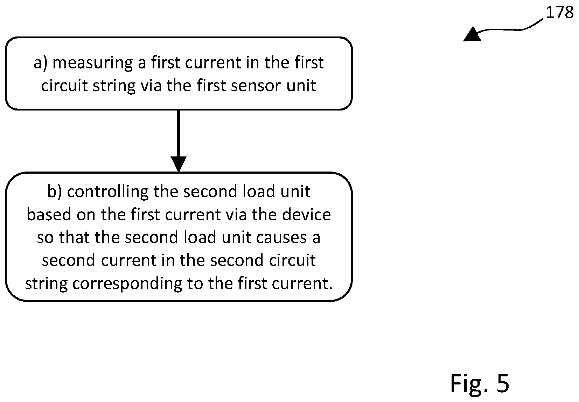

Figure 5 schematically illustrates an example of a method 178. The method 178 may be for the device 100 and/or for the system 176. The method may comprise the following steps:

For the method 178, reference is made to the advantageous explanations, preferred features, technical effects and/or advantages in an analogous manner as previously explained for the device 100 and/or the system 176.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A device comprising:
a first terminal, a second terminal, a third terminal, a first load unit, a first sensor unit, and a second load unit,
wherein the device is configured to be coupled to a first group of cells of a battery via the first and second terminals,
wherein the device is configured to be coupled to a second group of cells of a battery via the second and third terminals,
wherein a first circuit string of the device extends between the first and second terminals,
wherein the first load unit is integrated into the first circuit string,
wherein the first sensor unit is configured to measure a first current in the first circuit string,
wherein a second circuit string of the device extends between the second and third terminals,
wherein the second load unit is integrated into the second circuit string, and wherein the device is configured to control the second load unit based on the first current such that the second load unit causes a second current in the second circuit string corresponding to the first current.

2. The device according to the preceding claim, wherein the device further comprises a fourth terminal and a third load unit, wherein a third circuit string of the device extends between the first and fourth terminals, wherein the third load unit is integrated into the third circuit string, and wherein the device is configured to control the third load unit based on the first current such that the third load unit causes a third current in the third circuit string corresponding to the first current.

3. The device according to any of the preceding claims, wherein the first load unit comprises a processing unit, a dc-dc converter, and/or at least one linear regulator unit.

4. The device according to any of the preceding claims, wherein the first sensor unit comprises a first current mirror circuit including at least two transistors referred to as first sensor transistor and first mirror transistor, wherein the first sensor transistor is integrated into the first circuit string, wherein the first mirror transistor is coupled to the first sensor transistor such that the first mirror transistor causes through the first mirror transistor a first driver current that is in a predefined first ratio to the first current through the first sensor transistor, and wherein the device is configured to control the second load unit based on the first driver current.

5. The device according to the preceding claim, wherein the first current mirror circuit comprises another transistor which is referred to as first cascode transistor, wherein the first cascode transistor is connected in series to the first mirror transistor, and wherein the gate of the first cascode transistor is coupled to the second terminal.

6. The device according to any of the preceding claims 4 to 5, wherein the second load unit comprises a second current mirror circuit including at least two transistors referred to as second sensor transistor and second mirror transistor, wherein the second sensor transistor and the first mirror transistor are coupled in series, wherein the second mirror transistor is integrated into the second circuit string, and wherein the second mirror transistor is coupled to the second sensor transistor such that the second mirror transistor causes through the second circuit string the second current that is in a predefined second ratio to the first driver current.

7. The device according to the preceding claim, if also dependent on claim 5, wherein the first mirror transistor, the first cascode transistor, and the second sensor transistor are coupled in series.

8. The device according to any of the preceding claims 6 to 7, wherein the second ratio is the inverse of the first ratio.

9. The device according to the preceding claim, wherein the first ratio and the second ratio are predefined, such that the second current corresponds to the first current.

10. The device according to any of the preceding claims, if also dependent on claim 2 and 4, wherein the third load unit comprises a third current mirror circuit including two transistors referred to as third sensor transistor and third cascode transistor, wherein the first current mirror comprises also a fourth mirror transistor, wherein the fourth mirror transistor is coupled to the first sensor transistor such that the fourth mirror transistor causes through the fourth mirror transistor an intermediate current that is in a predefined fourth ratio to the first current through the first sensor transistor, wherein the first sensor unit comprises a fifth current mirror circuit including two transistors referred to as fifth sensor transistor and fifth mirror transistor, wherein the fourth mirror transistor and the fifth sensor transistor are connected in series, wherein the fifth mirror transistor is coupled to the fifth sensor transistor such that the fifth mirror transistor causes through the fifth mirror transistor a second driver current that is in a predefined fifth ratio to the intermediate current through the fifth sensor transistor, wherein the third senor transistor and the fifth mirror transistor are connected in series, wherein the third mirror transistor is integrated into the third circuit string, wherein the third mirror transistor is coupled to the third sensor transistor such that the third mirror transistor causes through the third circuit string a third current that is in a predefined third ratio to the second driver current.

11. The device according to the preceding claim, wherein the third ratio, fourth ratio, fifth ratio, and the third ratio are predefined, such that the third current corresponds to the first current.

12. A system comprising: a battery having a plurality of cells divided into a plurality of groups of cells, and a device according to any of the preceding claims.

13. The system according to the preceding claim, wherein the cells of the battery are divided into two groups of cells.

14. The system according to claim 12, wherein the device is configured according to any one of claims 3 to 11, wherein the cells of the battery are divided into three groups of cells.

15. A method for a device comprising a first terminal, a second terminal, a third terminal, a first load unit, a first sensor unit, and a second load unit, wherein the device is configured to be coupled to a first group of cells of a battery via the first and second terminals, wherein the device is configured to be coupled to a second group of cells of a battery via the second and third terminals, wherein a first circuit string extends between the first and second terminals, wherein the first load unit is integrated into the first circuit string, wherein a second circuit string extends between the second and third terminals, wherein the second load unit is integrated into the second circuit string, and wherein the method comprises the following steps:
a) measuring a first current in the first circuit string via the first sensor unit,
b) controlling the second load unit based on the first current via the device so that the second load unit causes a second current in the second circuit string corresponding to the first current.
